(19) Europäisches Patentamt
European Patent Office
Office européen des brevets

(11) **EP 2 154 491 A1**

(12) **EUROPEAN PATENT APPLICATION**

(43) Date of publication:
**17.02.2010 Bulletin 2010/07**

(51) Int Cl.:
**G01F 1/66** $^{(2006.01)}$

(21) Application number: **08161963.7**

(22) Date of filing: **07.08.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicant: **UAB Minatech**
**51421 Kaunas (LT)**

(72) Inventors:
  • **Ragauskas, Arminas**
    **LT-51390, Kaunas (LT)**

• **Virzonis, Darius**
  **LT 35144, Panevezys (LT)**
• **Vanagas, Gailius**
  **LT-36236, Paneve?ys (LT)**
• **Repecka, Vaidas**
  **LT-51390, Kaunas (LT)**

(74) Representative: **Aalbers, Arnt Reinier et al**
**De Vries & Metman**
**Overschiestraat 180**
**1062 XK Amsterdam (NL)**

(54) **Ultrasonic flow meter, transducer assembly and method**

(57)    The present invention relates to an ultrasonic flow meter, comprising a measuring tube (1) having a side wall, at least a first ultrasound transducer assembly (3) arranged at least partially inside the tube for transmitting ultrasound (5) and a second ultrasound transducer assembly (7) arranged at least partially inside the tube for receiving ultrasound. At least the first transducer assembly comprises a plurality of transducer elements arranged substantially parallel to the side wall of the tube and being configured for transmitting an ultrasound beam in a direction oriented at an inclined angle to the side wall.

The invention further relates to a method of measuring properties of a fluid (2) within a measuring tube.

Fig.1a

EP 2 154 491 A1

**Description**

The present invention relates to an ultrasound flow meter comprising a measuring tube having a side wall, at least a first ultrasound transducer assembly arranged at least partially inside the tube for transmitting ultrasound and a second ultrasound transducer assembly arranged at least partially inside the tube for receiving ultrasound. The invention further relates to a method of measuring properties of a fluid within a measuring tube as well as to a transducer assembly for use in the flow meter and/or for use in the method.

A flow meter of the above-mentioned type is known in the art, e.g., US 5,650,572 relates to an ultrasound flow meter and acknowledges that, when using ultrasound to measure the flow of moving liquid or gaseous media (fluids), the problem arises that the measurement signal supplied from the receiver depends not only on the flow, but also on the respective flow profile in the measurement tube and on the type of fluid flowing through it. Various flow profiles result, depending on the flow rate. Moreover, additional disturbances of the flow in a measuring tube arise when ultrasound transducers are placed to make the required angle with the tube walls, which is a common scheme of flow meter transducers placement, described elsewhere.

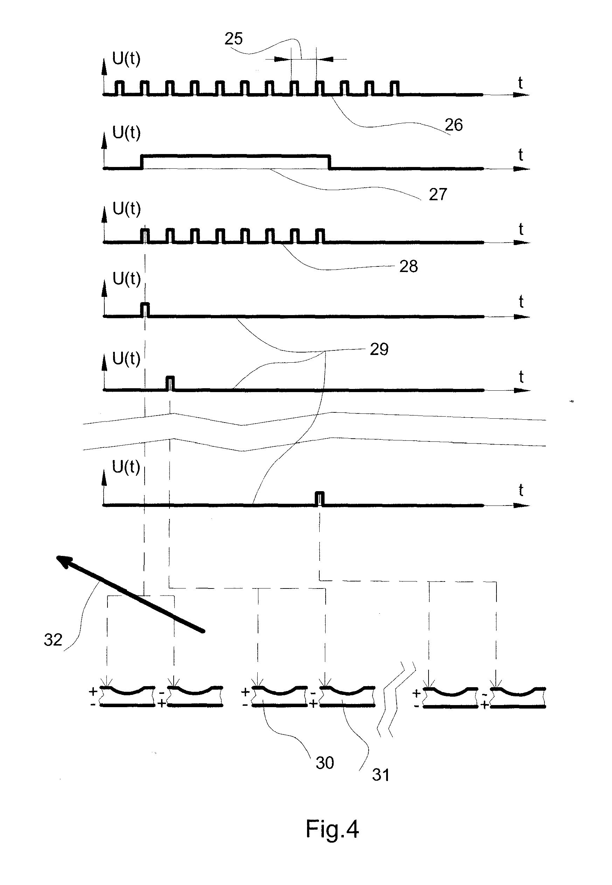

To improve measurement accuracy, the flow meter according to US 5,650,572 comprises a "quadratic measurement tube", an ultrasound transmitter transmitting ultrasound energy towards an opposite reflector in the tube, which reflects the ultrasound energy so that it is reflected at least once on every planar wall of said measurement tube before reaching a second reflector, opposite the receiver (Figure 4a). I.e., the ultrasound energy propagates along a spiral path in the tube.

EP 890 826 relates to a flow meter, which consists of a casing provided with a cover. The flow meter can be interposed in a pipeline system. The casing is provided to hold a measuring system, which includes a fitted ultrasonic converter on the cover, facilities for multiple detection of the ultrasound energy from the ultrasonic transmitter to the ultrasonic receiver in the flow passage of the casing, and associated electronics. A removable insert is arranged in the flow passage of the casing. The removable insert and the cover together form an entity, which contains the entire measurement system. The insert is trough-shaped, and fits in a matching pocket in the casing.

JP 11237263 relates to an ultrasonic flow meter wherein ultrasonic waves generated by a transducer T1 and a transducer T2 are radiated into a fluid, which flows inside a conduit. The "cross-sectional shape of the conduit in which the ultrasonic waves are propagated is formed to be nearly rectangular, and the inner wall surface which is nearly parallel to the propagation route of the ultrasonic waves has a gentle inclination. As a result, the number of times of their reflection on the inner wall surface is increased with reference to the component of the ultrasonic waves which are propagated so as to be deviated from a shortest route, and the point of time of their arrival to the reception-side transducer is delayed."

EP 1 742 024 discloses an ultrasound flow meter with a triangular cross section of the measurement tube. To produce the preferred spiral path of the ultrasound beam, the ultrasound transducers are mounted into the measuring tube such that their acoustical axes are arranged at the desired angle with the inner tube surface(s).

To maintain the efficacy of a flow meter, its measuring tube should be cleaned periodically and the flow meter recalibrated.

It is an object of the present invention to increase the intervals between periodic cleaning. It is a further object of the present invention to increase the accuracy and/or reliability of the flow meter.

To that end, at least the first transducer assembly of the flow meter comprises a plurality of transducer elements arranged substantially parallel to the side wall of the tube, e.g. substantially in a row along a direction of extension of the tube, and being configured for transmitting an ultrasound beam in a direction oriented at an inclined angle to the side wall.

Such a flow meter allows measuring of fluid flow along a desired measuring path while obviating arranging one or more transducers and/or acoustic mirrors protruding into the inner space of the measuring tube, therewith preventing introducing additional flow disturbances which affect the measurement data. Moreover, flow disturbances generally lead to regions of low flow velocity and turbulence, promoting deposition of matter (e.g. debris) present in the fluid, thus soiling the tube. Thus, soiling is also prevented and cleaning intervals may be increased.

The first transducer assembly may be provided as a separate device. The first transducer assembly may also be formed integrated into the side wall of the measuring tube.

Preferably the second transducer assembly is also arranged substantially parallel to the side wall of the tube, further reducing obstructing fluid flow.

For controlling the direction and/or intensity distribution of the ultrasound beam, it is useful that at least a portion of the transducer elements of the first transducer assembly are independently operable.

Each transducer element may comprise one or more individual transducer units or transducers. Although several types of transducer elements may be employed for realising the present flow meter, it has been found beneficial that the first transducer assembly comprises one or more capacitive micromachined ultrasound transducers (cMUTs) for the transducer elements, since cMUTs generally allow fabrication in various numbers, sizes and arrangements on substantially flat substrates. Such fabrication may further be relatively cost-efficient. CMUTs and methods for their fabrication are disclosed in e.g. US 5,619,476 and US 5,870,351. US 6,854,338 discloses that cMUTs are suitable for measuring fluid flow in a microfluidic channel.

It has been found by the applicant that cMUTs may also be employed for relatively large-scale fluid flow, e.g. in measurement tubes with diameters of several centimetres and above and for dense fluids or fluid that contain relatively high concentrations of pollutants.

The co-pending European patent application "Micromanufactured Ultrasonic Transducer and Method of Fabrication" by Darius Vir Ž onis, Marius Mikolajŭnas, Viktoras Grigaliŭnas and Vaidas Repe Č ka discloses (the fabrication of) improved cMUTs which are particularly suitable for fabricating the present flow meter.

Micromachined transducer assemblies such as cMUTs may be relatively flat, introducing little flow disturbances when mounted onto a side wall. Flat transducer assemblies may be mounted onto the wall of a measuring tube while introducing little flow obstruction or disturbances.

Thus, suitable existing tubing may be retrofitted with flat transducer assemblies such as cMUTs to form a flow meter according to the invention.

Claim 4 defines a suitable arrangement of transducer elements. The transducer element rows preferably are arranged also substantially parallel to the side wall of the tube, providing a substantially flat transducer assembly, for preventing disturbing fluid flow. The transducer element rows may suitably extend substantially perpendicular to the intended direction of propagation of the ultrasound beam to be generated. Such an arrangement allows increasing the transmitted power and/or size, e.g. diameter, of the ultrasound beam. In particular for increasing the beam power, one or more rows may comprise one or more transducer units in a widthwise direction, the mutual separation of the transducer units within the row being substantially smaller than the separation between transducer units of adjacent rows.

The flow meter of may be operated with relatively simple driving means in case at least a portion of the transducer elements is arranged adjacent each other with a mutual separation which is substantially equal to multiples of one half the wave length of the ultrasound waves to be generated.

The flow meter of claim 5 allows increasing the signal-to-noise ratio and thus the accuracy of the measurement.

The flow meter of claim 6 facilitates generation of a focused ultrasound beam.

Preferably, at least a portion of the curved rows is arranged as substantially concentric circles. This facilitates providing an ultrasound beam focused substantially in a focal point. The focal point is arranged substantially along a line extending through the centre of the circles and perpendicular to the side wall parallel to which the transducer elements are arranged.

The flow meter of claim 7 comprises such arrangement which may be operated with relatively simple driving means.

The flow meter of claim 8 allows increased ultrasonic power output at the same operating power input.

The flow meter of claim 9 is particularly useful, since it allows comparing measurements with and against the fluid flow through the flow pipe.

The flow meter of claim 10 may be fabricated relatively cost-efficient.

Another aspect of the invention is a method of measuring properties of a fluid within a measuring tube comprising a side wall. The method comprises operating a plurality of ultrasound transducer elements, which may be part of a transducer assembly, for generating an ultrasound beam traversing a path through the fluid towards a receiver, wherein the transducer elements are operated in a controlled sequence for generating the ultrasound beam in a direction oriented at an angle to the side wall.

The path of the ultrasound beam may comprise one or more reflections off at least one other side wall of the measuring tube.

The operation sequence concerns time interval between operating one or more subsequent transducer elements and may concern the driving power of one or more elements.

The method allows using a plurality of ultrasound transducer elements arranged along the side wall of the tube for generating the ultrasound beam. The method thus obviates mounting transducers and/or acoustic mirrors protruding into the inner space of the measuring tube, or comprised in additional tubes extending from a side from the portion to be investigated of the measuring tube. Such arrangements obstruct and/or disturb the fluid flow, hindering accurate measurement and facilitating soiling the tube by deposition of debris etc. present in the fluid.

The method of claim 12 allows increasing the ultrasound power and/or the size of the beam in a relatively simple manner. One or more rows may comprise one or more transducer units in a widthwise direction, the separation of the transducer units within the row being substantially smaller than the separation between transducer units of adjacent rows.

The method of claim 13 allows increasing the signal-to-noise ratio of the measurement. It also allows studying a particular volume of the fluid.

The method of claim 14 allows increasing the ultrasound power output of the transducer without substantially increasing the operating power input.

The invention will hereafter be explained in more detail with reference to the drawings, which are for explanatory purposes and should not be construed as limiting the invention.

In the Figures, a preferred design of ultrasonic transducer assemblies is presented which provides a relatively efficient beam forming and allows preserving operating means such as driving electronics a relatively low amount of complexity.

It should be noted that the Figures are not necessarily to scale and that details which are not necessary for understanding the present invention may have been omitted. Terms "above", "below", "upper", "lower", "side", and the like relate to the embodiments as oriented in the figures. Further, elements that are at least substantially identical or that perform an at least substantially identical function are denoted by the same reference numeral. In the drawings:

Figs. 1a-1c are schematic cross-sectional views of different embodiments of flow meters according to the present invention;
Fig. 2 schematically shows an embodiment of a transducer assembly;
Fig. 3 is a 3-dimensional view of the transducer of Fig. 2 illustrating its operation;
Fig. 4 illustrates a timing sequence for operating the transducer assembly;
Fig. 5 illustrates an ultrasound beam generated in accordance with the invention and propagating in a direction oriented at an angle to the horizontal axis.

As will be explained on more detail below, according to an embodiment of the invention a transducer assembly comprises transducer elements which are distributed, possibly in the form of an array, on a substrate in a transducer plane with a mutual separation which depends on the length of the ultrasound wave $\lambda$. The arrangement allows effective concentration of generated ultrasound energy at a desired point with an even temporal interval between pulses which excite the elements of the transducer. To improve the directionality of the generated ultrasound beam by as much as a factor of two, optional supplemental elements (working at inverted phase) are placed in- between adjacent main elements. The detailed description of the design of the transducer assembly and the way of driving it will be described further.

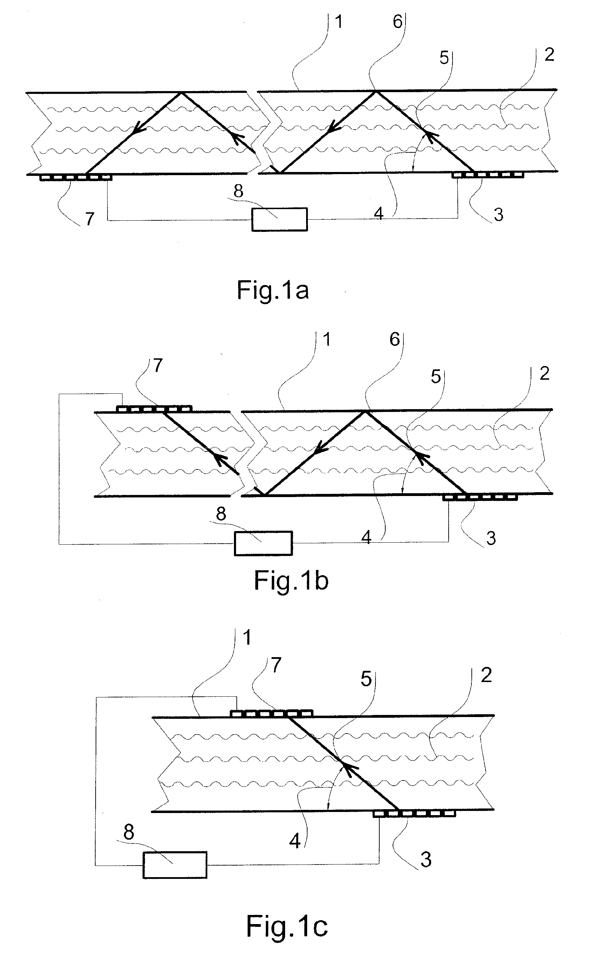

Figs. 1a-1c show several ways of the possible arrangements of positioning a transmitting and a receiving transducer assembly and an ultrasound beam path in between.

Fig. 1a-1c show a measuring tube 1 comprising a flowing fluid 2 of which the fluid flow is to be measured. The measuring tube 1 further comprises a first transducer assembly 3 comprising a plurality of transducer elements (indicated as compartments of the transducer assembly) arranged extending substantially parallel to a side wall of the tube 1 and being configured for transmitting, in a direction oriented at an inclined angle 4 to the side wall, an ultrasound beam 5. The ultrasound beam 5 traverses a path trough the fluid 2, which path may include a reflection 6, towards a second transducer assembly 7 for receiving and detecting the ultrasound beam 5. The flow meter is operated with electronic means 8.

Figs. 1a-1c each show the transducer assemblies 3, 7 arranged substantially parallel to a side wall of the measuring tube 1. The transducer assemblies 3, 7 are mounted flush with the inner surface of the tube 1 further reducing disturbing the fluid flow. One or both transducer assemblies 3, 7 may be integrated in a side wall of the tube 1 for still further reducing disturbing the fluid flow.

As may be appreciated, the transducer assemblies 3, 7 substantially do not pose an obstruction to the flow of the fluid 2. Any optional acoustic mirror (not shown) need also not protrude into the interior of the tube 1 and may be arranged substantially parallel to a side wall of the tube and flush with the inner surface of the tube 1.

The measuring tube 1 may have any suitable cross-sectional shape, e.g. substantially round, or having one or more substantially flat side walls or side wall portions such as a generally triangular or rectangular cross-section. Both transmitting (3) and receiving (7) transducers can be placed in the same wall or in different walls of the tube 1, as indicated in Figs. 1a-1c.

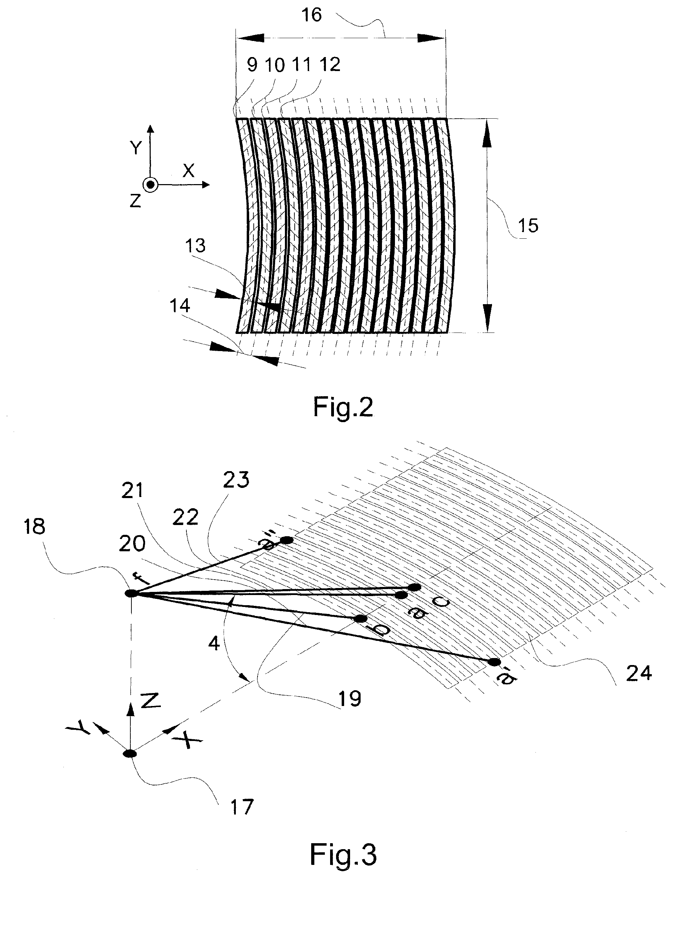

Fig. 2 is a top plan view of one of possible embodiments of a transmitting/receiving transducer assembly 3, 7, comprising a substrate (not indicated) provided with a plurality of transducer elements of which four are indicated with reference numerals 9-12. The substrate could be a separate object or be a portion of a side wall of a measuring tube. In Fig. 2 further a coordinate system for reference purposes is included. Hereafter, the reference numerals 9-12 represent all available transducer elements, unless stated otherwise. The transducer elements 9-12 are arranged in a pattern forming substantially mutually adjacent rows arranged substantially in the X-direction, the rows themselves extending substantially along the Y-direction being perpendicular to the direction of extension of the transducer assembly. Here, the transducer elements 9-12 have substantially equal widths 13. The separation between adjacent transducer elements 9-12 is indicated with reference numeral 14. 16 and 15 are the length and width of the transducer assembly, respectively.

In the embodiment shown, the transducer elements 9-12 of Fig. 2 each comprise a plurality of transducer units configured for being substantially simultaneously operable. Here, the transducer units are capacitive micromachined ultrasound transducers (cMUTs). The cMUTs are arranged relatively close together, such that the mutual separation of the cMUTs within the transducer elements 9-12 is substantially smaller than the separation between cMUTs of adjacent rows / transmission elements, which latter separation is of the order of the wavelength of the ultrasound to be generated by the transducer assembly 3, 7.

Fig. 3 is a schematic perspective (3-dimensional) view of the transducer of Fig. 2, showing a focal spot 18 at a position **f.** In a preferred situation, the position **f** of the focal spot coincides with the point of the first reflection 6 in Figs. 1a or 1b. 17 is a projection of the focal spot 18 onto the plane of the transducer (3, 7); 19-23 are the distances between the focal spot 18 and the various exemplary points a, a', a", b, c of transducer elements; 24 marks the centre line of an exemplary transducer element.

Since the shown transducer assembly is configured for generating ultrasound waves in a direction in a plane substantially parallel to the X-direction, the transducer preferably is arranged within a measuring tube 1 with the X-direction substantially parallel with the fluid flow to be measured.

Fig. 4 explains a suitable timing of the excitation pulses and the polarity of the bias for operating the transducer elements 9-12. Reference numeral 25 marks the period of continuous pulses 26 from a pulse generator; 27 marks a gating pulse for cutting a pulse train 28 cut from the chain of continuous pulses 26; pulses for exciting individual transducer elements 9-12 are indicated with 29. Further, reference numerals 30, 31 indicate transducer elements, wherein 30 marks a main element and 31 marks a supplemental element, which are configured for transmitting an ultrasound beam in a direction 32 as will be explained in more detail below.

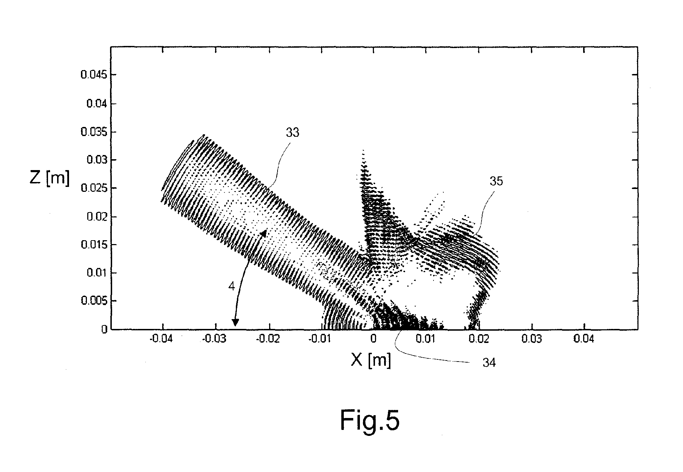

Fig. 5 is an intensity distribution plot of an exemplary ultrasound beam 33 generated by a transducer assembly centred about position 34 (at about X = 0.005 m). The transducer assembly also produces stray waves 35. The ultrasound beam is inclined at an inclined angle 4 with respect to the direction of extension of the plurality of transducer elements of the transducer assembly, here being substantially along the X-axis, more in particular at a an inclined angle 4 with respect to the main plane in which the transducer assembly extends, e.g. the substrate, here being substantially parallel to the X-Y plane. Preferably, the angle 4 is a relatively acute angle, between approximately 10°-80°, preferably below 60° or even 45°. In the shown embodiments the angle 4 is approximately 35°. The angle depends inter alia on the desired beam path 5, the number and positions of reflections 6, the separation of the transmitting and receiving transducer assemblies. Suitable paths comprise two or three reflections and extend at an inclined or oblique angle to the fluid flow, resembling a spiral path.

In operation, e.g. for measuring properties of the fluid 2 within the measuring tube 1, the transmitting transducer assembly 3 excites an ultrasound beam 5, which is inclined to the flow at an angle 4 to the plane of the transducer assembly and to the side wall. In one of possible embodiments the angle 4 amounts to 35°, but other angles are equally conceivable. The ultrasound beam 5 reaches the receiving transducer after traversing a path which may include one or more reflections from the inner surfaces of the measurement tube (indicated with reference numeral 6 in Figs. 1a 1b). The beam 5 may also be directed for direct reception (Fig. 1c). The exact path of the beam 5 depends on the measuring tube configuration.

For measuring fluid flow the ultrasound beam may be a pulsed beam. Fluid flow may be determined as a function of the time difference between excited and received pulses (time-of-flight method); the time delay between transmission and reception is in turn a function of flow rate. The measured data are captured and processed by the flow meter electronics 8.

It should be noted that in the figures the beam 5 is indicated propagating in one direction only (by the arrow heads in the trajectories 5). However, this is primarily done for explanatory purposes. In reality, the transducers 3 and 7 may be, and generally will be, substantially identical and the beam path 5 is traversed in both directions, possibly simultaneously, for improving measurement accuracy and reducing possible effects of artefacts.

In one embodiment the outside measurements 15 and 16 of the transducer assemblies 3, 7 (cf. Fig.2) were both kept equal to about 15 mm, thus providing a transducer assembly with a substantially square footprint. Such a transducer assembly size has been found suitable for operation with an ultrasound frequency of about 1 MHz in measurement tubes with approximately 25-32 mm cross sectional diameters. Larger measurement tubes may be fitted with substantially equal or larger sized transducer assemblies. As seen from Figs. 2 and 3, the first four transducer elements are marked as positions 9-12. The transducer elements are sized to having a width of $\lambda/2$, $\lambda$ being the wave length of the ultrasound waves to be generated. The transducer elements are arranged in mutually adjacent curved rows, here in a substantially concentric circular pattern. The arrangement maintains substantially the same distance 20-23 (Fig. 3) between each point within one element 9-12 to the (position **f** of the) focal spot 18.

Preferably, the distances 19, 21, 22 from the centres a, b, c, of the transducer elements to the focal point 18 arranged according to the following equation (Eq. 1):

$$2\ (d_i\ -\ d_0)\ =\ n\ \lambda \qquad\qquad (1)$$

in which $d_0$ is the distance 19 between the frontmost transducer element (9 in Fig. 2) and the focal spot 18; $d_i$ is the distance 21, 22 between the i-th transducer element (10, 11, 12 etc. in Fig. 2) of the transducer assembly and the focal spot 18; $\lambda$ is the wave length of the ultrasound wave and n is a natural number (n = 1, 2, 3, etc.).

Applying Eq. (1) for the centres of substantially straight rows (e.g. arranged substantially in the Y-direction) of transducer elements a linear focus is obtained arranged substantially parallel to the orientation of the transducer elements.

In case each individual transducer unit within each transducer element (e.g. extending along the curved row a', a, a") is arranged substantially according to Eq. (1), (i.e. with $d_i$ referring to the i-th individual transducer unit) the substantially circular arrangement of Fig. 3 is obtained, which may provide an ultrasound beam focused to a focal point 18. When arranging several transducer units adjacent in the widthwise direction within one transducer element for increasing the width thereof small deviations $\delta$ of Eq. 1 may be acceptable according to 2 $(d_i - d_0) = n \lambda \pm \delta \lambda$, with $\delta$ allowable up to a few percent of the ultrasound wavelength, e.g. at most about 5%, preferably less than about 2.5% of $\lambda$.

The separation 14 between two adjacent transducer elements 9-12 is chosen so that according to Eq. (1), the difference of the distances between adjacent transducer elements 9-12 and the focal spot (18, Fig. 3) would equal $\lambda/2$. The separation between adjacent transducer elements 9-10, 10-11, 11-12, etc. decreases slightly with increasing number of the transducer element (i.e. increasing distance from the frontmost transducer element along the direction X in Fig. 3) to keep the above formulated criteria satisfied. Such a design of the transducer assembly simplifies the forming the ultrasound and allows keeping the driving electronics at maximum simplicity.

To form an inclined beam, elements of a transducer assembly are to be excited in a sequence with time delay with respect to each other. An inclined beam may be generated by various arrangements of transducers, when excited by a suitable controlled sequence such that the phase fronts of waves generated by the different excited transducer elements suitably interfere to cooperate to form the desired beam. A 2-dimensional array may therefore be controlled to provide an ultrasound beam in a direction oriented at substantially any spherical angle to the plane of the array. Similarly, by properly adjusting the excitation sequence such that elements relatively towards an outside of the array are excited prior to elements arranged further inwards of the array, a focusing beam may be provided. For accurately controlling the behaviour of the beam, operation of the transducer elements requires accurate timing, which may require relatively accurate driving means e.g. control electronics.

The specific design of the transducer described above with respect to Figs. 2 and 3 allows supplying operating pulses (also referred to as exciting pulses) to each transducer element 9-12 with a constant time interval. This allows providing the exciting pulses from a pulse train produced by an ordinary generator of square pulses with a desired pulse duration and period. The exciting pulse duration may be optimized to produce ultrasound waves with desired characteristics.

Suitably, (cf. Fig. 4) the generator provides a pulse chain 26, which may be substantially continuous, with a pulse period 25 equal to 1/f, where f is a central resonance frequency of the transducer.

A gating pulse 27 may be used for slicing out a pulse train 28 from the continuous chain of generator pulses 26. Then, e.g. using ordinary binary logic circuit, individual pulses 29 are separated from the pulse train 28 and directed (after optional amplification) to a corresponding transducer element of the transducer assembly 3.

The transducer elements 9-12, positioned according to the description above and Eq. (1), are referred to as main elements as indicated with reference numeral 30 in Fig. 4. The width of an individual transducer element 9-12 generally will be less than half the separation between adjacent transducer elements 9-10, 10-11, 11-12, etc. for increasing generation accuracy of the ultrasound waveform. In such a case, supplemental transducer elements 31 can be introduced into the empty space between adjacent main transducer elements 30. Each pair of a main transducer element 30 and an adjacent supplemental transducer element 31 may be excited together substantially simultaneously with the same pulse. However, in order to have an adequate coupling between the ultrasound waves produced by both adjacent transducer elements 30, 31, the supplemental transducer elements 31 are (configured to be) biased at the inverse polarity in respect to the main elements (cf. Fig. 4). This causes the supplemental elements 31 to produce an ultrasound wave with an inverted (shifted by 180°) phase with respect to the main transducer elements 30. As a result, the power of a generated ultrasound wave may be doubled, or the same ultrasound power may be obtained at substantially half the driving power. This is thanks to the increased active area of the transducer without requiring additional electric power. Similarly, in a receiving transducer assembly, such arrangement of adjacent transducer elements which are configured for substantially simultaneous opposite operation allows doubling the receiving sensitivity.

The direction of an ultrasound beam which may be generated by the transducer elements 30, 31, is indicated with the arrow 32 in Fig. 4.

Fig. 5 is an intensity distribution plot of an exemplary ultrasound beam 33 generated by a transducer assembly extending substantially along the horizontal (X) axis and being centred about position 34 (X = 0.005 m). From Fig. 5 it may be apparent that the generated ultrasound beam 33 propagates at an angle of about 35° to the plane of the transducer assembly and thus to a side wall to which the transducer assembly is mounted substantially parallel. It may further be seen that the phase relation between adjacent transducer elements produces stray waves at 35. However, these waves are not directed towards the receiver and will therefore substantially not affect the measurement.

It should be noted that by adjusting the operation sequence the angle of the ultrasound beam with respect to the side wall may be determined. Thus, changes in the measurement setup may be accommodated, such as arranging a different measuring path to be traversed by the ultrasound beam or correcting for thermal expansion of the measurement tube or changes in the flow speed. Further, small misalignments of the first and second transducer assemblies, e.g. occurring during retrofitting existing tubing to turn it in to a flow meter according to the present invention may be corrected.

In sum, the present invention provides a flow meter with minimal influence, or at least significantly reduced influence, on the hydrodynamic resistance of the flow meter. Thus, the flow meter provides a significant increase in the accuracy of the signal to be measured and a significantly improved ratio of maximal / minimal measurable flow rates with a fixed measurement uncertainty. With the present flow meter that ratio can exceed 1000 for a flow measurement uncertainty corridor of +/- 2%.

The present invention is not restricted to the above described embodiments which can be varied in a number of ways within the scope of the claims. For instance, more than two transducer assemblies may be employed. Transducer assemblies may have differently shaped outlines (or footprints), e.g. substantially round. A transducer assembly may comprise transducer elements extending with substantially parallel S-like curved rows to emit ultrasound beams simultaneously in two different directions. Other types of transducer units or transducer elements, e.g. piezoelectric transducers, may be suitably employed.

The flow meter may also suitably be used for measuring other properties of a fluid within the measuring tube, such as fluid pressure and/or pollution of the fluid e.g. by means of the absorption and/or scattering of the ultrasound waves.

**Claims**

1. Ultrasonic flow meter, comprising a measuring tube (1) having a side wall, at least a first ultrasound transducer assembly (3) arranged at least partially inside the tube for transmitting ultrasound (5;35) and a second ultrasound transducer assembly (7) arranged at least partially inside the tube for receiving ultrasound,
   wherein at least the first transducer assembly comprises a plurality of transducer elements (9-12;30,31) arranged substantially parallel to the side wall of the tube and
   being configured for transmitting an ultrasound beam in a direction oriented at an inclined angle to the side wall.

2. Ultrasonic flow meter according to claim 1,
   wherein at least a portion of the transducer elements (9-12;30,31) of the first transducer assembly (3) is independently operable.

3. Ultrasonic flow meter according to claim 1 or 2,
   wherein the first transducer assembly (3) comprises one or more capacitive micromachined ultrasound transducers.

4. Ultrasonic flow meter according to any one of the preceding claims, wherein at least a portion of the transducer elements (9-12;30,31) of the first transducer assembly (3) are arranged in a pattern forming substantially mutually adjacent rows.

5. Ultrasonic flow meter according to any one of the preceding claims, wherein at least a portion of the transducer elements (9-12;30,31) of the first transducer assembly (3) is configured for transmitting a focused ultrasound beam.

6. Ultrasonic flow meter according to claim 5,
   wherein at least a portion of the transducer elements (9-12;30,31) of the first transducer assembly (3) is arranged in a pattern forming substantially mutually adjacent curved rows.

7. Ultrasonic flow meter according to claim 6,
   wherein at least a portion of the transducer elements (9-12;30,31) of the first transducer assembly (3) is arranged according to equation (1) of the description.

8. Ultrasonic flow meter according to any one of the preceding claims, wherein adjacent transducer elements (9-12;30,31) of the first transducer assembly (3) are configured for being substantially simultaneously operable at inverted phase.

9. Ultrasonic flow meter according to any one of the preceding claims, wherein the first transducer assembly (3) is configured for also receiving ultrasound waves.

10. Ultrasonic flow meter according to any one of the preceding claims, wherein the first transducer assembly (3) and the second transducer assembly (7) are substantially identical.

11. Method of measuring properties of a fluid (2) within a measuring tube (1) comprising a side wall, comprising operating a plurality of ultrasound transducer elements (9-12;30,31) for generating an ultrasound beam (5;35) traversing a path through the fluid towards a receiver (7), wherein the transducer elements (9-12;30,31) are operated in a controlled sequence for generating the ultrasound beam (5;35) in a direction oriented at an angle to the side wall.

12. Method of claim 11, wherein at least a portion of the transducer elements (9-12;30,31) is substantially simultaneously operable, wherein the substantially simultaneously operated transducer elements (9-12;30,31) form a pattern comprising substantially mutually adjacent rows.

13. Method of claim 11 or 12, wherein the transducer elements (9-12;30,31) are operated for generating a focused ultrasound beam.

14. Method of claim 12 or 13, wherein adjacent transducer elements (9-12;30,31) are operated substantially simultaneously at an opposite phase.

15. Ultrasound transducer assembly (3,7) configured for use in an ultrasonic flow meter according to any one of the claims 1-10 and/or configured for use in the method of any one of the claims 11-14, comprising a substrate and a plurality of transducer elements (9-12) arranged substantially parallel to the substrate and being configured for transmitting an ultrasound beam (5;35) in a direction oriented at an inclined angle to the substrate.

Fig.1a

Fig.1b

Fig.1c

Fig.2

Fig.3

Fig.4

Fig.5

Europäisches
Patentamt

European
Patent Office

Office européen
des brevets

# EUROPEAN SEARCH REPORT

Application Number

EP 08 16 1963

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2008/000577 A (SIEMENS AG [DE]; BIERL RUDOLF [DE]; LESSER MARTIN [DE]; MEYER ANDREAS) 3 January 2008 (2008-01-03) * page 3, line 8 - page 5, line 21; figures 1,2 * ----- | 1-15 | INV. G01F1/66 |
| X | WO 02/055966 A (SIEMENS AG [DE]; STARK REINHARD [DE]; REISSINGER ACHIM [DE]) 18 July 2002 (2002-07-18) * page 4, paragraph 6 - page 7, paragraph 2; figures 1,2 * ----- | 1,4, 9-12,15 | |
| A | WO 2005/090929 A (BOSCH GMBH ROBERT [DE]; LANG TOBIAS [DE]) 29 September 2005 (2005-09-29) * page 6, line 23 - page 7, line 40; figure 1 * ----- | 1,11,15 | |

TECHNICAL FIELDS
SEARCHED        (IPC)

G01F

The present search report has been drawn up for all claims

| Place of search | Date of completion of the search | Examiner |
|---|---|---|
| The Hague | 26 November 2008 | Boerrigter, Herman |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons

 

& : member of the same patent family, corresponding
     document

EPO FORM 1503 03.82 (P04C01)

## ANNEX TO THE EUROPEAN SEARCH REPORT
## ON EUROPEAN PATENT APPLICATION NO.

EP 08 16 1963

This annex lists the patent family members relating to the patent documents cited in  the above-mentioned European search report.
The members are as contained in the European Patent Office EDP file on
The European Patent Office is in no way liable for these particulars which are merely given for the purpose of information.

26-11-2008

| Patent document cited in search report | | Publication date | Patent family member(s) | | Publication date |
|---|---|---|---|---|---|
| WO 2008000577 | A | 03-01-2008 | DE 102006029199 | B3 | 24-01-2008 |
| WO 02055966 | A | 18-07-2002 | AT 346281 | T | 15-12-2006 |
| | | | CN 1623081 | A | 01-06-2005 |
| | | | DK 1350077 | T3 | 05-03-2007 |
| | | | EP 1350077 | A2 | 08-10-2003 |
| | | | JP 2004520581 | T | 08-07-2004 |
| WO 2005090929 | A | 29-09-2005 | DE 102004013251 | A1 | 06-10-2005 |
| | | | EP 1728054 | A1 | 06-12-2006 |
| | | | JP 2007529725 | T | 25-10-2007 |
| | | | KR 20070004723 | A | 09-01-2007 |
| | | | US 2007261501 | A1 | 15-11-2007 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5650572 A
- EP 890826 A
- JP 11237263 B
- EP 1742024 A
- US 5619476 A
- US 5870351 A
- US 6854338 B